# EUROPÄISCHE PATENTSCHRIFT

(11) **EP 0 796 457 B1**
(45) Veröffentlichungstag und Bekanntmachung des Hinweises auf die Patenterteilung: **06.10.1999**
(21) Anmeldenummer: 95939227.5
(22) Anmeldetag: 05.12.1995
(51) Int. Cl.: G05B 13/02, G06F 15/80

(54) **VERFAHREN ZUM BETRIEB NEURONALER NETZE IN INDUSTRIEANLAGEN UND ZUGEHÖRIGES NEURONALES NETZ**
METHOD OF OPERATING NEURAL NETWORKS IN INDUSTRIAL PLANTS AND ASSOCIATED NEURAL NETWORK
PROCEDE D'EXPLOITATION DE RESEAUX NEURONAUX DANS DES INSTALLATIONS INDUSTRIELLES ET RESEAU NEURONAL ASSOCIE

(30) Priorität: 05.12.1994 DE 4443193
(43) Veröffentlichungstag der Anmeldung: 24.09.1997
(73) Patentinhaber: SIEMENS AKTIENGESELLSCHAFT, 80333 München (DE)
(72) Erfinder: FURUMOTO, Herbert, D-91052 Erlangen (DE); WOLF, Thomas, D-91334 Hemhofen (DE)
(86) Internationale Anmeldenummer: DE9501743
(87) Internationale Veröffentlichungsnummer: WO9618135

(56) Entgegenhaltungen:
- EP-A- 0 444 801
- EP-A- 0 590 433
- WO-A-94/22074
- DE-A- 4 209 746
- FUJITSU-SCIENTIFIC AND TECHNICAL JOURNAL, Bd. 29, Nr. 3, 21.September 1993 Seiten 217-226, XP 000411498 OKADA H ET AL 'KNOWLEDGE-BASED NEURAL NETOWRK - USING FUZZY LOGIC TO INITIALIZE A MULTILAYERED NEURAL NETWORK AND INTERPRET POSTLEARNING RESULTS'

## Beschreibung

Die Erfindung bezieht sich auf ein Verfahren zum Betrieb von strukturierten Neuro-Fuzzy-System während der Produktion in Industrieanlagen, wobei das Neuro-Fuzzy-System aus einem Neuronalen Netz als Neuroteil mit Eingangs- und Ausgangsneuronen und aus einem Fuzzyteil mit Fuzzifizierung, Regelwerk sowie Inferenz und Defuzzifizierung besteht und wobei der Neuroteil einem Training mit vorgegebenem Lernprozeß unterzogen wird. Daneben bezieht sich die Erfindung auch auf das zugehörige Neuro-Fuzzy-System, insbesondere zur Anwendung in der Papierindustrie.

Im Rahmen der Produktionsautomatisierung werden in zunehmendem Maße Fuzzy-Systeme in Kombination mit neuronalen Netzen eingesetzt. Neuronale Netze können allgemein als Werkzeug verstanden werden, das geeignet ist, beliebige nichtlineare Funktionen nachzubilden, sofern diese Funktionen anhand von Beispielen vorliegen. Das neuronale Netz kann somit in Industrieanlagen die Prozeßführung während der Produktion durch "Lernen" von nichtlinearen Strategien verbessern.

Grundbedingung für den erfolgreichen Einsatz von Neuro-Fuzzy-Systemen in Industrieanlagen ist das Anpassen speziell des neuronalen Netzes an wechselnde Randbedingungen der Produktion. In diesem Zusammenhang tritt das Problem auf, daß das bisherige im neuronalen Netz enthaltene Wissen nicht "überlernt" wird.

Beim Stand der Technik werden üblicherweise neuronale Netze in bestimmten zeitlichen Abständen "Offline" völlig neu trainiert, was zeitaufwendig ist. Im Gegensatz zu seinen Systemen, die sich für Regelzwecke in der Automatisierungstechnik etabliert haben und durch Ein- und Ausgänge sowie die Begriffe "Fuzzifizierung, Zugehörigkeitsfunktionen, Regelwerk, Defuzzifizierung" gekennzeichnet sind, treten bei Neuro-Fuzzy-Systemen mit neuronalen Netzen in der Praxis noch Schwierigkeiten auf.

Aus der DE-A-42 09 746 ist ein strukturiertes Neuro-Fuzzy-System bekannt, das als Neuro-Fuzzy-Regler verwendet werden soll und bei dem der Neuroteil ein selbstlernfähiges neuronales Netz mit der Struktur eines Fuzzy-Systems ist. Dabei wird der Neuro-Fuzzy-Regler, um Operatordaten zu erzeugen, einem mehrstufigen, insbesondere mindestens dreistufigen, Lernprozeß unterzogen, bei dem ausgehend von dem Verhalten eines beliebigen Operators Eingangsdaten für einzelne Lernstufen über zumindest ein Prozeßmodell durch Simulation erzeugt werden. Weiterhin ist aus der WO-A-94/01823 ein neuronales Netz bekannt, das in Baumstruktur streng hierarchisch aus neuronalen Teilnetzen aufgebaut ist mit jeweils einer Vielzahl von Eingängen und jeweils einem Ausgang. Ein solches neuronales Netz wird jeweils bereichsweise für die Teilnetze, d.h. in einem einzelnen Baumzweig der hierarchischen Baumstruktur, trainiert. Schließlich ist aus der EP-A-0 444 801 ein hierarchisches Überwachungssystem in allgemeiner Form bekannt, bei dem einem Nutzer Entscheidungseinheiten einerseits und ein Expertensystem mit Wissensbasis andererseits zur Verfügung gestellt werden. Neben dem Expertensystem soll dabei auch Gebrauch von neuronalen Netzwerken und/oder Fuzzy-Logik gemacht werden können.

Aufgabe der Erfindung ist es demgegenüber, ein verbessertes Verfahren zum Betrieb von Neuro-Fuzzy-Systemen anzugeben. Mit einem entsprechend ausgebildeten Neuro-Fuzzy-System soll eine Optimierung bisheriger Fuzzy-Regler in der Automatisierungstechnik, insbesondere in der Papierindustrie, erreicht werden.

Die Aufgabe ist erfindungsgemäß dadurch gelöst, daß zum Anpassen an wechselnde Randbedingungen der Produktion der Industrieanlage das neuronale Netz in Bereiche aufgeteilt wird, die den Einfluß der einzelnen Eingangs- bzw. Ausgangsgrößen wiedergeben, und daß jeder Bereich des Netzes beim Betrieb der Anlage, d.h. Online, bedarfsweise separat einem partiellen Lernen unterzogen wird, bei dem jeweils andere Bereiche des Netzes unverändert bleiben.

Ein zugehöriges Neuro-Fuzzy-System ist gekennzeichnet durch eine Supervisor-Einheit zur Überwachung des partiellen Lernens, mit der jeweils bedarfsweise einzelne Bereiche des neuronalen Netzes zum Nachlernen ausgewählt werden. Vorzugsweise wird das partielle Lernen der einzelnen Bereiche vom der Supervisor-Einheit gesteuert, wobei alle Ein- und Ausgänge einzeln bewertet werden.

Das erfindungsgemäße Verfahren kann vorteilhafterweise Anwendung in der Produktionsautomatisierung finden. Wenn Lerndaten zur Verfügung stehen, können mit den neuronalen Netzen die Zugehörigkeitsfunktionen und die Regeln des Fuzzy-Systems einfacher eingestellt werden. Bei Änderungen der Randbedingungen in der Produktion kann eine die Anpassung durch das Online-Lernen des neuronalen Netzes ausreichend sein.

Im Rahmen der Erfindung wird das partielle Lernen bei einem strukturierten Neuro-Fuzzy-System mit Ein- und Ausgängen sowie zugehörigen Eingangs- und Ausgangsneuronen derart gesteuert, daß bei Prozeßzuständen, bei denen einer der Eingänge außerhalb der Gültigkeitsbereiche des betreffenden Einganges liegt, alle Neuronen, die diesem Bereich zugeordnet sind, neu trainiert werden. Dabei werden alle angesammelten Daten, bei denen der Eingang im erweiterten Gültigkeitsbereich des neuronalen Netzes lag, zum weiteren Online-Lernen herangezogen.

Das erfindungsgemäße Verfahren ist - wie gefordert - vorteilhaft in der Papierindustrie, insbesondere bei der Zellstoffkochung und bei der eigentlichen Papierherstellung, einsetzbar. Speziell bei der Zellstoffherstellung ist wesentlich, daß die Rohmaterialien biologisch nachwachsende Faserstoffe sind, beispielsweise Holz, Stroh, Bambus oder bei der Zuckerherstellung aus Zuckerrohr entstehende, sogenannte Bagasse. Da sich die biologischen Materialien in ihren chemischen und physikalischen Eigenschaften sehr schwer geschlossen beschreiben lassen, wurden erfolgreich neuronale Netze eingesetzt, die anhand einzelner Beispiele trainiert werden. Da in der laufenden Zellstoffproduktion sich die Eigenschaften des Rohstoffes "Holz" zumindest teilweise ändern können, ist der Einsatz von strukturierten Neuro-Fuzzy-Netzen, bei denen das partielle Lernen online möglich ist, besonders erfolgversprechend.

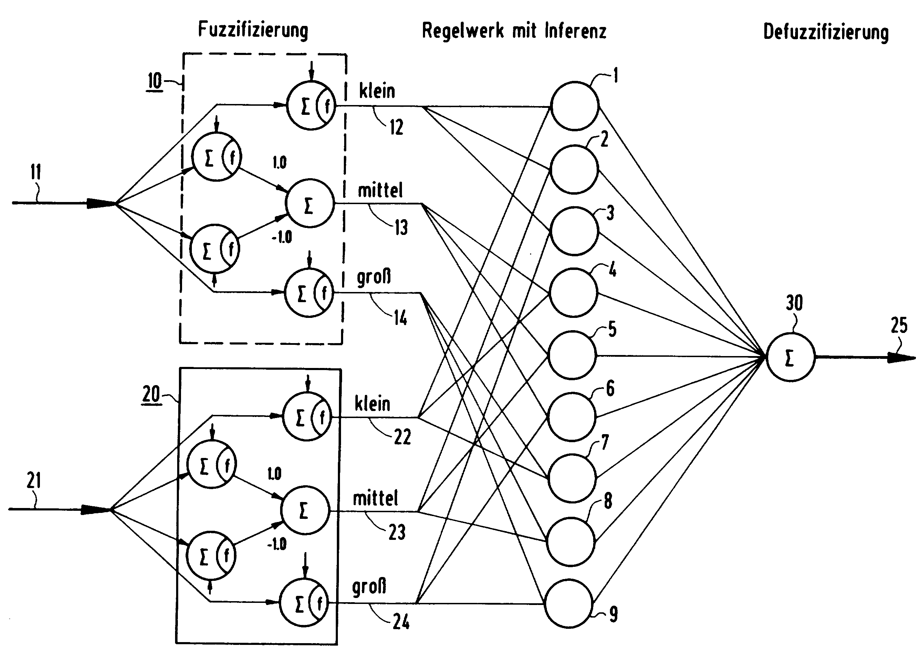

Weitere Einzelheiten und Vorteile der Erfindung ergeben sich aus der nachfolgenden Beschreib ung eines Ausführungsbeispieles in Verbindung mit weiteren Patentansprüchen. Die einzige Figur zeigt in vereinfachter Darstellung die Strukturierung eines neuronalen Netzes zum partiellen Online-Lernen.

In der Figur ist ein Neuro-Fuzzy-System mit Bereichen 10 und 20 mit jeweils einem Eingang 11 bzw. 21 und einem einzigen Ausgang 25 dargestellt. Die Fuzzifizierung der Eingänge erfolgt in den als Netzwerkteilen strukturierten Bereichen 10 bzw. 20. Die Wahrheitsgrade "klein", "mittel", "groß" werden an den Punkten 12 bis 14 bzw. 22 bis 24 am Ausgang der Bereiche 10 bzw. 20 berechnet und neun einzelnen Neuronen 1 bis 9 für das Regelwerk zugeführt.

Die Neuronen 1 bis 9 im allgemeinen Teil des in der Figur dargestellten neuronalen Netzes sind als sog. Minimum-Neu ronen ausgebildet, wofür die Regeln des in ein neuronales Netz transformierten Fuzzy-Systems gelten. Die Defuzzifizierung erfolgt durch die Berechnung der gewichteten Summation in einem Ausgangsneuron 30, das den Ausgang 25 ansteuert.

Zum neuronalen Netz gehört ein in der Figur nicht im einzelnen dargestellter, sogenannter Supervisor zur Überwachung bzw. Steuerung des partiellen Lernens. Dafür dient beispielsweise ein PC mit entsprechender Software. Alle Ein- und Ausgänge werden damit nach folgenden Vorschriften bewertet:

Während des ursprünglichen Offline-Trainierens und der vorausgegangenen Online-Nachtrainingsphasen weisen die Ein- und Ausgänge einen Arbeitspunkt auf. Dieser ist vorzugsweise der Mittelwert. Daneben gibt es einen allgemeinen Gültigkeitsbereich, der insbesondere aus der Standardabweichung n berechnet wird. Dabei ergibt sich ein Gültigkeitsbereich G = n x s mit n zwischen 1 und 2 je nach Beschaffenheit des neuronalen Netzes. Der engere Gültigkeitsbereich des neuronalen Netzes ist dagegen kleiner als der allgemeine Gültigkeitsbereich, so daß hier n zwischen 0,5 und 1,5 gewählt wird.

Es kann vorteilhaft sein, alle Datensätze, bei denen einer der Eingänge im weiteren Gültigkeitsbereich des Netzes liegt, für die nächste Online-Trainingsphase mit den zugehörigen Ausgängen abzuspeichern. Damit wird also die Differenzmenge zwischen allgemeinem und engerem Gültigkeitsbereich erfaßt.

Die Bewertung der Ausgänge erfolgt in entsprechender Weise. Allerdings steht hier anstelle des Gültigkeitsbereiches der Gütebereich, mit dem der einzelne Ausgang bewertet wird. Die Standardabweichung ist hier die gemittelte Abweichung zwischen den vom neuronalen Netz berechneten Wert und einem optimalen Wert. Dieser optimale Wert dient zur Beurteilung der Güte des neuronalen Netzes und kann sich beispielsweise aus nachträglichen Laboranalysen ergeben oder aber auch aus Modellbetrachtungen über die Güte des neuronalen Netzes.

Aus letzterem kann sich eine Gütefunktion ergeben, in die in der Regel solche Prozeßgrößen einfließen, die als Folge der Aktivitäten des neuronalen Netzes betrachtet wurden. Beispielsweise ist dies in der Praxis die Produktqualität am Ende eines diskontinuierlichen Netzes, wobei die Produktqualität mit einem Zeitversatz zur Aussage des neuronalen Netzes anfällt.

Das partielle Lernen eines strukturierten neuronalen Netzes entsprechend der Figur wird folgendermaßen gesteuert:
- Kommt es zu Prozeßzuständen, bei denen einer der Eingänge außerhalb des Gültigkeitsbereiches des betreffenden Einganges liegt, werden die Neuronen, die diesem Eingang zugeordnet sind, neu trainiert. Dabei können vorteilhafterweise die angesammelten Daten, bei denen dieser Eingang im weiteren Gültigkeitsbereich des Netzes lag, ebenfalls zum Lernen herangezogen werden.
- Daneben kann der Start des Online-Lernens der angegebenen Neuronen mit dem Ansprechen eines Qualitätskriteriums für das neuronale Netz verbunden sein. In diesem Fall wird das Online-Lernen gestartet, wenn sowohl das Kriterium aus der Qualität anspricht und ein Retraining gefordert ist, als auch wenn das entsprechende Kriterium für den betreffenden Eingang vorliegt. Zum Trainieren werden hier jeweils die bisher für diesen Eingang angefallenen Datensätze herangezogen.
- Gegebenenfalls kann das Online-Lernen immer erst dann gestartet werden, wenn Qualitätskriterien verletzt werden. In diesem Fall wird geprüft, ob Eingänge den weiteren Gültigkeitsbereich des Netzes verletzt haben. Ist dies der Fall, werden die dem entsprechenden Eingang zugeordneten Teilbereiche trainiert. Liegt eine Verletzung von mehreren Gültigkeitsbereichen der Eingänge vor, können mehr als ein Bereich trainiert werden, wobei das Trainieren mit allen bisher aufgelaufenen Daten erfolgen kann. Gegebenenfalls werden dazu mehrere Trainingszyklen herangezogen, in denen jeweils die den Eingängen zugeordneten Bereiche mit den entsprechenden Daten trainiert werden. Wird dabei festgestellt, daß es einerseits keine abnormen Abweichungen bei den Eingängen gab und daß andererseits das Driften des neuronalen Netzes keinem Ausgang zugeordnet werden kann, wird der allgemeine Teil des Netzwerkes trainiert. Dies bedeutet speziell bei einem Neuro-Fuzzy-Netzwerk, daß die Regeln trainiert werden.

Das partielle Lernen der den Ausgang betreffenden Neuronen erfolgt immer dann, wenn eine Güteverschlechterung des neuronalen Netzes festgestellt wird und wenn diese Güteverschlechterung keinem Eingang zugeordnet werden kann. Gibt es im betreffenden neuronalen Netz mehrere Ausgänge, so ist es zweckmäßig, für jeden Ausgang ein Gütekriterium festzustellen. Tritt eine nicht auf die Ausgänge rückbeziehbare Verletzung des entsprechenden Gütekriteriums auf, wird der betreffende Bereich des Ausganges neu trainiert.

Für das Trainieren des allgemeinen Teils des neuronalen Netzes können vorteilhafte Regeln aufgestellt werden. Beispielsweise kann das Trainieren immer dann erfolgen, wenn ein generelles Gütekriterium stark verletzt wird oder wenn Gütekriterien für mehr als einen Ausgang verletzt werden.

Die vorstehend beschriebenen Verfahren wurden speziell bei Produktionsanlagen der Papierindustrie, insbesondere bei der Zellstoff- und Papierherstellung, erprobt. Die Zellstoff- und Papierherstellung läßt sich zumeist nicht nach geschlossenen Algorithmen steuern. Neben der ständigen Anpassung des Prozeßverlaufes an die neuen Rohstoffqualitäten verlangt die Vielfalt der herstellten Papier- und Zellstoffsorten häufig ein Umschalten und eine Strukturänderung in den Prozeßverläufen, was die herkömmliche Prozeßautomatisierung erschwert.

Vorgeschlagen wurde bereits, bei der Zellstoffkochung neuronale Netze einzusetzen, wozu in den Veröffentlichungen
1) Obradovic, O., Deco, G., Furumoto, H., Fricke, C.: Neural Network for industrial process control - applications in wood pulp production, 6th International Conference Neural Networks and their industrial & cognitive applications in Nimes France am 25.-29.10.1993, S. 25 - 32
2) Obradovic, O., Deco. G., Furumoto, H., Fricke, C.: Application of Neural Networks in Pulp Production, 17. Fachtagung für Künstliche Intelligenz, in: Künstliche Intelligenz (1993) 8, S. 83
die diesbezüglichen technischen Angaben vorhanden sind. Dabei wird davon ausgegangen, daß das verwendete neuronale Netz komplett anhand von Beispielen trainiert wird.

Bei der Zellstoffkochung liegen aber speziell für den Rohstoff "Holz", der ein biologisches Material darstellt, äußerst komplexe Verhältnisse vor. Aufgrund von genetischen Neukombinationen von Eigenschaftsmerkmalen durch die Vererbung, von unterschiedlichen Wachstumsbedingungen wie Klima, Bodenbeschaffenheit, Stellung des Baumes im Bestand, der Zeitpunkt des Baumes bzw. der Ernte von ein- und mehrjährigen Rohstoffen unterliegen die Rohstoffeigenschaften großen Schwankungen, insbesondere auch dann, wenn das Holz aus unterschiedlichen Wachstumsgebieten kommt.

Beim Einsatz von neuronalen Netzen in Verbindung mit Fuzzy-Reglern bei der Zellstoffkochung muß ein bereits trainiertes neuronales Netz sehr rasch, d.h. Online, lernfähig sein. Letzteres soll insbesondere für Teilbereiche des neuronalen Netzes gelten. Beispielsweise braucht häufig nur der Rohstoffeinfluß, d.h. die Neuronen des neuronalen Netzes, die mit den Rohstoffeigenschaften verknüpft sind, oder die Neuronen, die den Einfluß eines bestimmten Prozeßparameters auf den Ausgang, z.B. einen Stellwert oder einer zu modellierenden Qualität, wiedergeben, partiell neu gelernt zu werden. Dagegen dürfen die Neuronen, die anderen, sich nicht verändernden Prozeßparametern zugeordnet werden können, nicht nachtrainiert werden, um das bereits in den Neuronen vorhandene Wissen nicht "überzutrainieren" oder sogar vorhandenes Wissen zu verlieren, wenn nur mit ausgewählten Datensätzen nachtrainiert wird.

Das Prüfen auf partielles Nachtrainieren des vorhandenen neuronalen Netzes auf alle oder nur bestimmte Eingänge kann also speziell bei der Zellstoffkochung Online erfolgen, wobei insbesondere die mit der Rohstoffqualität verbundenen oder durch die Strukturumschaltungen beeinflußten Eingänge gezielt mit den jeweils vorhandenen Daten nachtrainiert werden. Dabei kann die Supervision des neuronalen Netzes sowohl auf die Auswahl der zu trainierenden Neuronen als auch auf die Auswahl der Daten, mit denen nachtrainiert wird, ausgedehnt werden.

Ein spezifisches Beispiel ist ein neuronales Netz für die sogenannte Kappazahl bei der Zellstoffkochung, mit der die Endqualität des Zellstoffes erfaßbar ist. Wenn man hier die Abweichungen zwischen den vorausgesagten und den tatsächlich im Labor bestimmten Qualitäten des Zellstoffes, wie beispielsweise die Kappazahl und/oder die Viskosität, vergleicht, ergeben sich häufig Diskrepanzen. Bei Verwendung eines neuronalen Netzes liegen dabei alle Eingangsgrößen in einem Bereich, der beim Trainieren des originalen neuronalen Netzes berücksichtigt wurde. D.h. es wird also mit dem neuronalen Netz nicht in Bereiche extrapoliert, für die es nicht trainiert wurde. Vielmehr kann bei Anwendung des erfindungsgemäßen Verfahrens gezielt der Bereich des neuronalen Netzes, der die Holzqualität berücksichtigt, Online beeinflußt werden. D.h. es wird in diesem Fall das Eingangsneuron für die Holzfeuchte und die drei benachbarten Neuronen in der verstecken Schicht nachtrainiert. Alle anderen Neuronen können dagegen unberücksichtigt bleiben und werden nicht trainiert.

In der Praxis werden also bei laufender Produktion nur die Daten für das Trainieren benutzt, die in der letzten Zeit, beispielsweise Tagen, und nach Auftreten einer Drift der vorausgesagten und gewünschten Qualität beobachtet wurden. Es kann sich dabei um relativ wenige Datensätze handeln, mit denen die wenigen Gewichte und der sogenannte Bias der angegebenen Neuronen neu bestimmt wird.

Ergibt eine Überprüfung, daß das neuronale Netz zur Vorhersage in einem solchen Temperaturbereich benutzt wird, für den es noch nicht trainiert worden ist, kann entsprechend vorgegangen werden. Das Eingangsneuron für die Temperatur und die benachbarten verdeckten Neuronen werden dann neu trainiert und zwar mit den Datensätzen, die diese neuen Temperaturen beinhalten. Es kann in diesem Fall das neuronale Netz mit einer Alarmmeldung, beispielsweise "unbekannter Temperaturbereich", versehen werden, wobei anschließend solange Daten in diesem Bereich gesammelt werden, bis ein partielles Nachtrainieren in diesen Bereich sinnvoll und möglich ist.

Üblicherweise sollten zum Nachtrainieren wenigstens vier Datensätze vorhanden sein. Dies zeigt einen wesentlichen Vorteil des partiellen Online-Lernens: Es kann mit relativ wenig Daten gezielt nachtrainiert werden, da nicht alle Neuronen neu trainiert werden müssen, sondern nunmehr gezielt vorgegangen wird.

Die Datensätze, mit denen das neuronale Netz partiell trainiert wird, können auch aus vorhandenen Daten herausgefiltert werden. Dies kann auch durch Clusterung um die dem neuronalen Netz noch nicht bekannten Arbeitspunkte erfolgen oder auch durch Filtern der Daten nach bestimmten Eingangsgrößen, für die partiell nachtrainiert werden soll.

Entsprechende veränderliche Randbedingungen in Teilbereichen können auch bei der eigentlichen Papierherstellung auftreten, wenn Altpapiere mit zeitlich unterschiedlicher Konsistenz und/oder Qualität eingesetzt werden. Auch hier ist das erfindungsgemäße Verfahren vorteilhaft einsetzbar.

## Patentansprüche

1. Verfahren zum Betrieb von strukturierten Neuro-Fuzzy-Systemen während der Produktion in Industrieanlagen, wobei das Neuro-Fuzzy-System aus einem neuronalen Netz als Neuroteil mit Eingangs- und Ausgangsneuronen und aus einem Fuzzyteil mit Fuzzifizierung, Regelwerk sowie Inferenz und Defuzzifizierung besteht und wobei der Neuroteil einem Training mit vorgegebenem Lernprozeß unterzogen wird, **dadurch gekennzeichnet**, daß zum Anpassen an wechselnde Randbedingungen der Produktion das neuronale Netz in Bereiche aufgeteilt wird, die den Einfluß der einzelnen Eingangs- bzw. Ausgangsgrößen wiedergeben, und daß jeder Bereich des Netzes beim Online-Betrieb der Anlage, bedarfsweise separat einem partiellen Lernen unterzogen wird, bei dem jeweils andere Bereiche des neuronalen Netzes unverändert bleiben.

2. Verfahren nach Anspruch 1, **dadurch gekennzeichnet**, daß das partielle Lernen der einzelnen Bereiche überwacht wird, wobei alle Eingangs- und Ausgangsgrößen einzeln bewertet werden.

3. Verfahren nach Anspruch 2, wobei die Eingangs- und Ausgangsneuronen definierten Ein- und Ausgänge des Fuzzyteils zugeordnet sind, **dadurch gekennzeichnet**, daß das partielle Lernen derart gesteuert wird, daß bei Prozeßzuständen, bei denen einer der Eingänge außerhalb des Gültigkeitsbereiches des betreffenden Einganges liegt, alle Neuronen, die diesem Bereich zugeordnet sind, neu trainiert werden.

4. Verfahren nach Anspruch 3, **dadurch gekennzeichnet**, daß beim partiellen Lernen alle angesammelten Daten, bei denen der Eingang im erweiterten Gültigkeitsbereich des neuronalen Netzes lag, zum zusätzlichen Online-Lernen der Neuronen herangezogen werden.

5. Verfahren nach Anspruch 3, **dadurch gekennzeichnet**, daß der Start des Online-Lernens der Neuronen mit dem Ansprechen eines oder mehrerer Qualitätskriterien für das betreffende neuronale Netz verbunden ist.

6. Verfahren nach Anspruch 3, **dadurch gekennzeichnet**, daß das partielle Lernen der den Ausgang betreffenden Neuronen dann erfolgt, wenn eine Güteverschlechterung des neuronalen Netzes festgestellt wird.

7. Verfahren nach Anspruch 6, **dadurch gekennzeichnet**, daß nur die Gewichte zu den Ausgangsneuronen neu trainiert werden, die im Bereich der Güteverschlechterung liegen.

8. Verfahren nach Anspruch 6, **dadurch gekennzeichnet**, daß bei Feststellen einer Güteverschlechterung über den gesamten Arbeitsbereich alle Gewichte zu den Ausgangsneuronen neu traniert werden.

9. Verfahren nach Anspruch 7 und 8, **dadurch gekennzeichnet**, daß das Trainieren der Gewichte einer Regeländerung dem Fuzzy-Teilsystem entspricht.

10. Neuro-Fuzzy-System zum Betrieb während der Produktion in Industrieanlagen, insbesondere zur Anwendung in der Papierindustrie, wobei ein neuronales Netz (1-9, 30) als Neuroteil mit Eingangs- und Ausgangsneuronen und ein Fuzzy-Teil (10, 20) mit Fuzzyfizierung, Regelwerk sowie Inferenz und Defuzzyfizierung vorhanden ist und wobei der Neuroteil einem Training mit vorgegebenen Lernprozeß unterzogen wird, dadurch gekennzeichnet, daß zum Anpassen an wechselnde Randbedingungen der Produktion das neuronale Netz (1-9, 30) in Bereiche aufgeteilt ist, die den Einfluß der einzelnen Eingangs- bzw. Ausgangsgrößen wiedergeben, und daß jeder Bereich des neuronalen Netzes (1-9, 30) beim Online-Betrieb der Anlage, bedarfsweise separat einem partiellen Lernen unterzogen wird, bei dem jeweils andere Bereiche des neuronalen Netzes (1-9, 30) unverändert bleiben, wobei eine Supervisor-Einheit (1-9, 30) zur Steuerung des partiellen Lernens vorgesehen ist, mit der jeweils bedarfsweise einzelne Bereiche des neuronalen Netzes zum Nachlernen aktiviert werden.

11. Neuro-Fuzzy-System nach Anspruch 10, **dadurch gekennzeichnet**, daß die Datensätze, mit denen das neuronale Netz (1-9, 30) partiell trainiert wird, aus vorhandenen Daten mittels der Supervisor-Einheit herausgefiltert werden.

## Claims

1. Method for operating structured neuro-fuzzy-systems during production in industrial installations, wherein the neuro-fuzzy-system comprises a neuronal network as neuro portion with input and output neurons and a fuzzy portion with fuzzification, control unit as well as inference and defuzzification, and wherein the neuro portion is subjected to training with a predetermined learning process, characterised in that for the adaptation to changing marginal conditions of the production, the neuronal network is divided into regions which reproduce the influence of the individual input and output variables, and in that during online operation of the installation, each region of the network is, as necessary, subjected separately to a partial learning, in which respective other regions of the neuronal network remain unchanged.

2. Method according to claim 1, characterised in that the partial learning of the individual regions is monitored, with all input and output variables being evaluated individually.

3. Method according to claim 2, wherein the input and output neurons are allocated to defined inputs and outputs of the fuzzy portion, characterised in that the partial learning is controlled in such a way that in process states in which one of the inputs lies outside the region of validity of the respective input, all neurons allocated to this region are retrained.

4. Method according to claim 3, characterised in that during the partial learning, all collected data, the input of which was in the expanded region of validity of the neuronal network, is used for the additional online learning of the neurons.

5. Method according to claim 3, characterised in that the start of the online learning of the neurons is linked with the response to one or more quality criteria for the respective neuronal network.

6. Method according to claim 3, characterised in that the partial learning of the neurons relating to the output takes place if a deterioration in the quality of the neuronal network is determined.

7. Method according to claim 6, characterised in that only the weights corresponding to the output neurons that lie in the region of the deterioration in quality are retrained.

8. Method according to claim 6, characterised in that when a deterioration in quality is determined over the entire operating range, all of the weights corresponding to the output neurons are retrained.

9. Method according to claims 7 and 8, characterised in that the training of the weights of a control alteration corresponds to the fuzzy subsystem.

10. Neuro-fuzzy-system for operation during production in industrial installations, in particular for use in the paper industry, wherein there is a neuronal network (1-9, 30) as neuro portion with input and output neurons and a fuzzy portion (10, 20) with fuzzification, control unit as well as inference and defuzzification, and wherein the neuro portion is subjected to training with a predetermined learning process, characterised in that for the adaptation to changing marginal conditions of the production, the neuronal network (1-9, 30) is divided into regions which reproduce the influence of the individual input and output variables, and in that during online operation of the installation, each region of the neuronal network (1-9, 30) is, as necessary, subjected separately to a partial learning, in which respective other regions of the neuronal network (1-9, 30) remain unchanged, wherein there is provided a supervisor unit (1-9, 30) for controlling the partial learning, with which in each case as necessary, individual regions of the neuronal network are activated for retraining.

11. Neuro-fuzzy-system according to claim 10, characterised in that the data records with which the neuronal network (1-9, 30) is partially trained are filtered out of existing data by means of the supervisor unit.

## Revendications

1. Procédé pour faire fonctionner des systèmes neuronaux flous structurés pendant la production dans des installations industrielles, le système neuronal flou étant constitué d'un réseau neuronal comme partie neuronale ayant des neurones d'entrée et des neurones de sortie et d'une partie floue avec formulation en logique floue, mécanisme de règles et inférence et formulation de résultat en logique non floue et la partie neuronale étant soumise à un apprentissage avec processus d'apprentissage prédéterminé,
caractérisé par le fait que, pour une adaptation à des conditions limites variables de la production, on divise le réseau neuronal en domaines qui reproduisent l'influence des grandeurs individuelles d'entrée et de sortie et que, lors du fonctionnement on-line, en direct, de l'installation, on soumet chaque domaine du réseau, si nécessaire séparément, à un apprentissage partiel lors duquel les autres domaines respectifs du réseau neuronal restent inchangés.

2. Procédé selon la revendication 1, caractérisé par le fait qu'on surveille l'apprentissage partiel des domaines individuels, toutes les grandeurs d'entrée et de sortie étant évaluées individuellement.

3. Procédé selon la revendication 2, les neurones d'entrée et de sortie étant associés à des entrées et à des sorties déterminées de la partie floue, caractérisé par le fait qu'on commande l'apprentissage partiel de telle sorte que, pour des états de processus pour lesquels l'une des entrées se trouve en dehors du domaine de validité de l'entrée considérée, on entraîne de nouveau tous les neurones qui sont associés à ce domaine.

4. Procédé selon la revendication 3, caractérisé par le fait que, lors de l'apprentissage partiel, on exploite toutes les données accumulées, pour lesquelles l'entrée se trouvait dans le domaine de validité étendu du réseau neuronal, en vue de la poursuite de l'apprentissage en direct des neurones.

5. Procédé selon la revendication 3, caractérisé par le fait que le démarrage de l'apprentissage en direct des neurones est lié à la valeur d'un ou de plusieurs critères de qualité pour le réseau neuronal considéré.

6. Procédé selon la revendication 3, caractérisé par le fait que, lors de la détection d'une détérioration de la qualité du réseau neuronal, on effectue un apprentissage partiel des neurones concernant la sortie.

7. Procédé selon la revendication 6, caractérisé par le fait qu'on n'effectue un nouvel apprentissage que des poids des neurones de sortie, qui se trouvent dans le domaine de la détérioration de la qualité.

8. Procédé selon la revendication 6, caractérisé par le fait que, lors de la détection d'une détérioration de la qualité sur tout le domaine de travail, on effectue un nouvel apprentissage de tous les poids vers les neurones de sortie.

9. Procédé selon la revendication 7 ou 8, caractérisé par le fait que l'apprentissage des poids correspond à une modification de règle dans le sous-système flou.

10. Système neuronal flou destiné à fonctionner pendant la production dans des installations industrielles, notamment en vue d'une application dans l'industrie du papier, selon lequel il existe un réseau neuronal (1 à 9, 30) comme partie neuronale ayant des neurones d'entrée et des neurones de sortie et une partie floue (10, 20) avec formulation en logique floue, mécanisme de règles et inférence et formulation de résultat en logique non floue et selon lequel le réseau neuronal est soumis à un apprentissage avec processus d'apprentissage prédéterminé,
caractérisé par le fait que, pour une adaptation à des conditions limites variables de la production, le réseau neuronal (1 à 9, 30) est divisé en domaines qui reproduisent l'influence des grandeurs individuelles d'entrée et de sortie et que, lors du fonctionnement en direct de l'installation, chaque domaine du réseau neuronal (1 à 9, 30) est soumis, si nécessaire séparément, à un apprentissage partiel lors duquel les autres domaines respectifs du réseau neuronal (1 à 9, 30) restent inchangés, une unité superviseur (1 à 9, 30) étant prévue pour la commande de l'apprentissage partiel et pour l'activation à chaque fois, si nécessaire, de domaines individuels du réseau neuronal en vue de l'apprentissage ultérieur.

11. Système neuronal flou selon la revendication 10, caractérisé par le fait que les blocs de données avec lesquels on effectue un apprentissage partiel du réseau neuronal (1 à 9, 30) sont extraits par filtrage de données existantes au moyen de l'unité superviseur.
